**Europäisches Patentamt**

**European Patent Office**

**Office européen des brevets**

(19)

(11) **EP 1 162 608 A2**

(12) **EUROPEAN PATENT APPLICATION**

(43) Date of publication:
**12.12.2001 Bulletin 2001/50**

(51) Int Cl.[7]: **G11B 7/09**

(21) Application number: **01112935.0**

(22) Date of filing: **06.06.2001**

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(30) Priority: **06.06.2000 JP 2000169537<br>06.10.2000 JP 2000308098**<br><br>(71) Applicant: **KABUSHIKI KAISHA TOSHIBA<br>Kawasaki-shi, Kanagawa-ken 210-8572 (JP)** | (72) Inventors:<br>• **Yonezawa, Minoru, Kabushiki Kaisha Toshiba<br>Minato-ku, Tokyo 105-8001 (JP)**<br>• **Kubota, Hiroshi, Kabushiki Kaisha Toshiba<br>Minato-ku, Tokyo 105-8001 (JP)**<br>• **Arakawa, Shinichiro, Kabushiki Kaisha Toshiba<br>Minato-ku, Tokyo 105-8001 (JP)**<br><br>(74) Representative: **HOFFMANN - EITLE<br>Patent- und Rechtsanwälte<br>Arabellastrasse 4<br>81925 München (DE)** |

(54) **Optical disk apparatus and method of adjusting the same**

(57)     There is provided a control circuit (10, 11) for arithmetically processing at least one of focus-directional and tracking-directional position error signals, and adding the arithmetic operation result as an input amount to a coil for driving in the opposite direction. The control circuit (10, 11) produces such a control signal as to cancel the effect of an oscillation mode of an objective lens holder (16). An output determination circuit (20) temporarily restricts functions of the control circuit when the determination circuit has determined that a disturbance component is mixed in the position error signal. Thereby, even in the case of slight displacement, the objective lens (3) can be controlled independently in the focusing and tracking directions while avoiding interference movement in both directions.

F I G. 2

**EP 1 162 608 A2**

## Description

The present invention relates generally to an optical disk apparatus for recording/reproducing information on/from an optical disk having information recording tracks, and more particularly to an optical disk apparatus incorporating an objective lens driving apparatus, which moves a beam spot on an information recording surface of the optical disk in a direction perpendicular to the optical disk and in a direction crossing the tracks on the optical disk, as well as a method of adjusting the optical disk apparatus.

In the field of optical disk apparatuses, an objective lens driving apparatus has been proposed and used. The objective lens driving apparatus holds an objective lens and moves a beam spot formed by the objective lens to a desired radial position on the disk and at the same time to a desired position in a direction perpendicular to the disk. In short, the objective lens driving apparatus effects tracking and focusing on the information tracks of the optical disk.

In the objective lens driving apparatus, the objective lens is supported to be independently movable in a tracking direction and a focusing direction, that is, in two axial directions comprising a horizontal direction of the disk and a vertical direction of the disk. The objective lens driving apparatus optically detects position error amounts of the objective lens from target positions in the two axial directions, respectively and independently, and also controls the positions in the two axial directions respectively and independently.

In detecting the position error amounts, a return beam from a beam spot formed on the information recording surface by means of the objective lens is used. In general, the return beam is processed by a four-division photodetector by an astigmatic method, a knife-edge method, etc., thereby to bring the beam spot into just focus on the disk surface.

In general, tracking on a target track is effected using signals corresponding position error amounts detected by a two-division photodetector by a three-beam method, push-pull method, phase error detection method, etc.

In the prior art, however, the signals representative of the detected error amounts are independently processed, delivered to independently operable focus drive coil and track drive coil, and thus controlled.

With modern development of information recording density, the density of tracks has increased and the precision of positioning of the objective lens has been remarkably enhanced.

If the above-mentioned focusing and tracking operations are considered from the standpoint of precision, it cannot be said that an objective lens holder is driven exactly independently by the signals input to the respective drive coils. Specifically, the objective lens holder is constructed to be independently driven in the focusing and tracking directions, but it is known that there is an operation mode of the objective lens holder in which the objective lens holder is driven with interference in the focusing and tracking directions depending on the supporting system of the objective lens holder. This mode adversely affects the objective lens holder as an interference motion of both the focusing and tracking directions.

Actual structures of the objective lens driving apparatus will now be described.

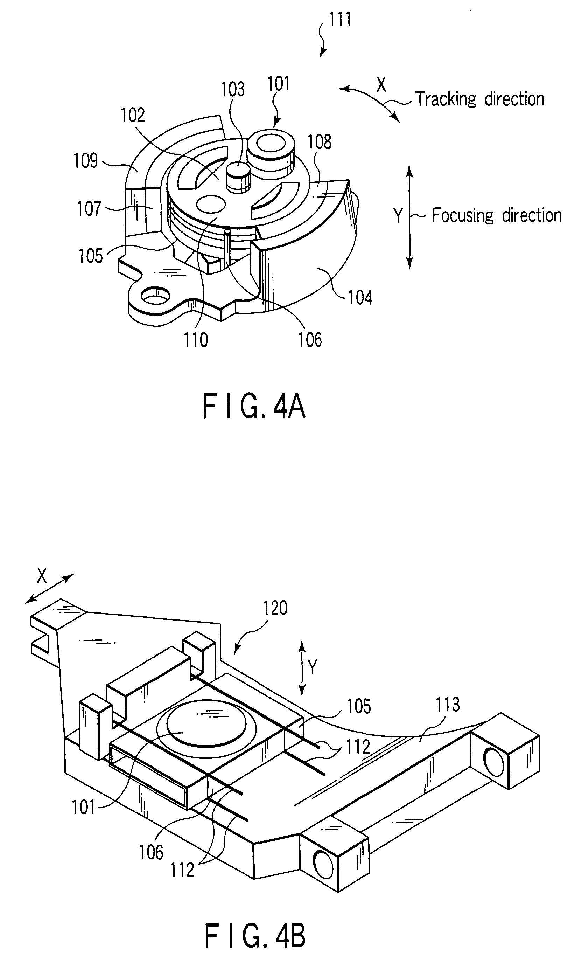

FIG. 4A shows an objective lens driving apparatus 111 of a shaft-sliding type. An objective lens holder 110 has a base of a magnetic material. The objective lens holder 110 slides on a shaft 103, which is inserted in a central portion of a top surface of the base, thus moving an objective lens 101 in a focusing direction. In addition, the objective lens holder 110 rotates on the shaft 103 to move the objective lens 101 in a tracking direction.

The objective lens holder 110 is disposed to be axially slidable and to be rotatable on the shaft 103 by means of a bearing portion 102 engaging the shaft 103 and constituting a slide bearing mechanism with the shaft 103. The objective lens 101 is provided on a top surface of the objective lens holder 110.

The objective lens holder 110 is also used as a coil bobbin. A focusing coil 105 for controlling the axial position of the objective lens holder 110 and a tracking coil 106 for controlling the circumferential position of the objective lens holder 110 are fixed on the outer periphery of the objective lens holder 110.

A magnetic circuit is constructed such that two inner yokes are projected symmetrically with respect to the shaft 103 on the top surface of the base at positions facing the inner surface of the cylindrical portion of the objective lens holder 110. The two inner yokes are fitted in the cylindrical portion in a non-contact state. In addition, on the outside of the cylindrical portion, outer yokes 104 and 109 are disposed to be opposed to the outer surfaces of the inner yokes. Axially magnetized permanent magnets 107 and 108 are interposed among the inner yokes, outer yokes and the top surface of the base.

In the objective lens driving apparatus with the above structure, the position of the objective lens holder 110 is shifted in a Y-axis direction by an electromagnetic force produced by controlling power to the focusing coil 105. Thus, the focusing control is effected. On the other hand, the position of the objective lens holder 110 is turned in an X-axis direction by an electromagnetic force produced by controlling power to the tracking coil 106. Thus, the tracking control is effected. The controls of the power to these coils are performed by independent servo systems.

A small plate formed of a magnetic body such as an iron piece is disposed on the outer periphery of the objective lens holder 110 on which the tracking coil 106 and focusing coil 105 are fixed. Utilizing the function of the magnetic circuit formed between the coils and permanent magnets 107 and 108, the small plate produces a pre-load in a direction perpendicular to the axial direction of the support shaft 103 in order to exactly slide the objective lens holder 110 on the support shaft 103.

The pre-load is necessary for the sliding operation of the objective lens holder 110 on the support shaft 103. However, a friction caused by the pre-load causes an adverse affect, which may disable slight movement of the objective lens holder 110.

In the positioning control with a very high frequency region, an objective lens driving apparatus is required which can linearly shift the objective lens on a nanometer order. However, if there is a nonlinear factor such as friction, the shifting on this order cannot be realized by the sliding. In the objective lens driving apparatus of the shaft-sliding type, the shifting on the nanometer order is achieved by elastic deformation of the bearing portion 102 or oscillation of the objective lens holder 110 due to the pre-load, with the center of oscillation being at the contact point of the bearing portion.

The oscillation of the objective lens holder 110 has an oscillation mode that is an interference mode in the focusing and tracking directions. Owing to this mode, the objective lens 101 is inevitably shifted in both the directions at the same time.

If the adverse affect of the oscillation mode is considered from the standpoint of the positioning control, it is observed as a phase disturbance in a frequency response in focusing actuator characteristics or tracking actuator characteristics of the objective lens driving apparatus. As regards the phase characteristics, if the phase is greatly delayed, a phase margin for positioning control may decrease and become unstable. If the phase is progressed, the gain is raised. At some frequencies of the oscillation mode, a gain margin may decrease and become unstable.

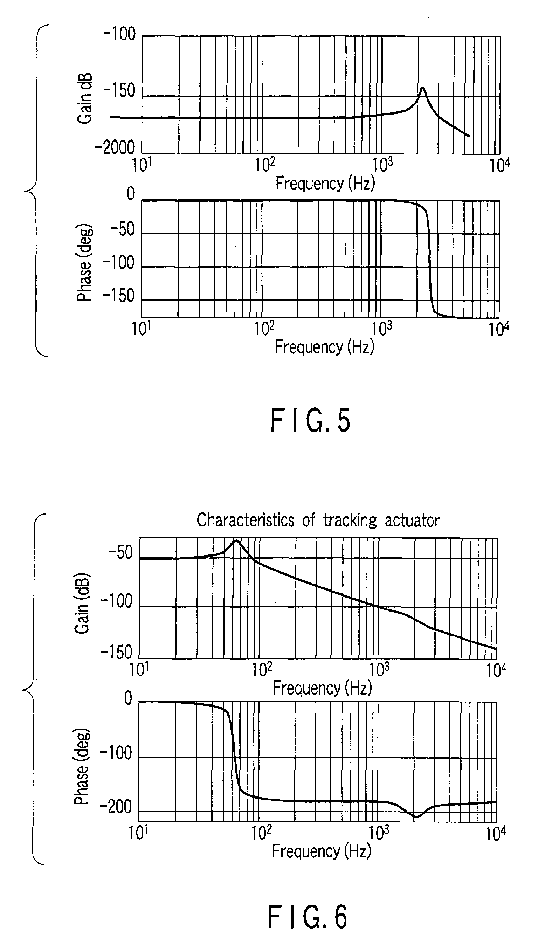

FIG. 6 shows tracking actuator characteristics in the case of the presence of an oscillation mode with frequency characteristics as shown in FIG. 5. In this case, the phase is delayed and a phase margin is disadvantageously decreased.

The frequency of the oscillation mode is determined, for example, depending on the characteristics of the material of the bearing portion 102. The value of the frequency is present in a frequency region near the control band set on an order of several kHz, specifically, about 3 to 5 kHz. Accordingly, unless this frequency is suppressed by any means, a stable control cannot be performed.

Aside from the objective lens driving apparatus of the shaft-sliding type, FIG. 4B shows an objective lens driving apparatus wherein an objective lens 101, etc. are supported by wire elements 112. In this case, too, when the objective lens 101 is to be slightly moved, there will occur an oscillation mode, with the center of oscillation being near points of support by the wire elements 112. This oscillation mode adversely affects the positioning control system for the objective lens 101, similarly with the case of the above-described shaft-sliding type objective lens driving apparatus. Thus, how to suppress the oscillation mode is a common problem to be solved, irrespective of the structures of objective lens driving apparatuses.

As has been described above, the conventional objective lens driving apparatus is constructed such that the positioning in the focusing direction and the positioning in the tracking direction are independently controlled. Thus, when the recording density is increased, the independency of the support system will fail to meet the required precision, and occurrence of interference components has to be taken into account.

For example, in the shaft-sliding type objective lens driving apparatus, which is an example of the objective lens driving apparatus, a friction occurs at a position of contact between the support shaft and the wall of the hole in which the support shaft is inserted. The friction prevents the independent driving of the objective lens in the focusing and tracking directions. When the objective lens is to be slightly moved, an oscillation will occur, with the center of oscillation being at the contact point between the shaft and the hole.

In particular, there is a case where oscillations will occur while interfering between the focusing and tracking directions. The interfering mode may adversely affect the phase characteristics of the positioning control system. The adverse affect will increase as the objective lens is to be driven more precisely.

As has been discussed above, the conventional objective lens driving apparatus is unable to suppress adverse affect of interference in each direction, when a higher density recording, which is currently demanded and will be demanded in the future, is to be realized. With the conventional objective lens driving apparatus, it is difficult to enhance the precision of positioning of the objective lens.

The present invention has been made in consideration of the above problems, and the object thereof is to provide an optical disk apparatus incorporating an objective lens driving apparatus capable of performing high-precision positioning operations for an objective lens, even when a recording density is to be enhanced, as well as an adjustment method applicable to the optical disk apparatus.

According to the invention of claim 1, there is provided an objective lens driving apparatus comprising:

an objective lens;
an objective lens holder for holding the objective lens, the objective lens holder being supported to be movable in an optical axis direction of a light beam made incident on the objective lens and a direction perpendicular to the optical axis direction;
a focusing coil for driving the objective lens holder in the optical axis direction;
a tracking coil for driving the objective lens holder in the direction perpendicular to the optical axis direction;

focus detection means for detecting a positioning error of the objective lens holder in the optical axis direction;

tracking detection means for detecting a positioning error of the objective lens holder in the direction perpendicular to the optical axis direction;

focus control means for receiving a detection signal from the focus detection means and outputting an arithmetic operation result of this detection signal to the focusing coil;

tracking control means for receiving a detection signal from the tracking detection means and outputting an arithmetic operation result of this detection signal to the tracking coil; and

compensation means for receiving at least one of output signals from the focus control means and the tracking control means, and adding an arithmetic operation result of the received signal to an output signal from the tracking control means to the tracking coil or to an output signal from the focus control means to the focusing coil.

According to the invention of claim 13, there is provided an optical disk apparatus comprising:

an objective lens for converging a light beam onto an optical disk;

an objective lens holder for holding the objective lens, the objective lens holder being supported to be movable in an optical axis direction of a light beam made incident on the objective lens and a direction perpendicular to the optical axis direction;

a focusing coil for driving the objective lens holder in the optical axis direction;

a tracking coil for driving the objective lens holder in the direction perpendicular to the optical axis direction;

focus detection means for detecting a positioning error of the objective lens holder in the optical axis direction;

tracking detection means for detecting a positioning error of the objective lens holder in the direction perpendicular to the optical axis direction;

control means for arithmetically processing at least one of detection signals from the focus detection means and the tracking detection means and outputting a control signal to each of the focusing coil and the tracking coil; and

determination means for temporarily restricting functions of the control means when the determination means has determined that a disturbance component is mixed in the detection signal.

According to the invention of claim 32, there is provided an adjustment method for an optical disk apparatus comprising:

an objective lens for converging a light beam onto an optical disk having information recordable/ reproducible land tracks and groove tracks;

an objective lens holder for holding the objective lens, the objective lens holder being supported to be movable in an optical axis direction of a light beam made incident on the objective lens and a direction perpendicular to the optical axis direction;

a focusing coil for driving the objective lens holder in the optical axis direction;

a tracking coil for driving the objective lens holder in the direction perpendicular to the optical axis direction;

focus detection means for detecting a positioning error of the objective lens holder in the optical axis direction;

tracking detection means for detecting a positioning error of the objective lens holder in the direction perpendicular to the optical axis direction; and

control means for arithmetically processing at least one of detection signals from the focus detection means and the tracking detection means and outputting a control signal to each of the focusing coil and the tracking coil,

the method comprising:

generating a disturbance component of a predetermined frequency;

adding the disturbance component to the detection signal;

detecting a phase difference between a phase of a response signal corresponding to the detection signal, to which the disturbance component has been added, and a phase of the added disturbance component, in each of cases where the land tracks are being subjected to a tracking control and the groove tracks are being subjected to the tracking control; and

setting parameters for arithmetic operations in the control means such that a difference value between the phase difference in the case where the land tracks are being subjected to the tracking control and the phase difference in the case where the groove tracks are being subjected to the tracking control may become a predetermined value or less.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a perspective view schematically showing the structure of an optical disk apparatus according to the present invention;

FIG. 2 is a block diagram schematically showing the structure of a first embodiment applied to the optical disk apparatus of the invention;

FIG. 3 is a block diagram illustrating the effects of an oscillation mode;

FIGS. 4A and 4B show structures of conventional objective lens driving apparatuses;

FIG. 5 shows an example of frequency characteristics of the oscillation mode;

FIG. 6 illustrates the effect of the oscillation mode upon tracking actuator characteristics;

FIG. 7 is a block diagram schematically showing the structure of a second embodiment applied to the optical disk apparatus of the invention;

FIG. 8 is a block diagram schematically showing the structure of a third embodiment applied to the optical disk apparatus of the invention;

FIG. 9 is a block diagram schematically showing the structure of a fourth embodiment applied to the optical disk apparatus of the invention;

FIG. 10 is a block diagram schematically showing the structure of a seventh embodiment applied to the optical disk apparatus of the invention;

FIG. 11 is a block diagram schematically showing the structure of a fifth embodiment applied to the optical disk apparatus of the invention;

FIG. 12A shows transmission characteristics of a stable closed loop in a tracking control system, and FIGS. 12B and 12C show effects of resonance modes;

FIG. 13 is a flow chart illustrating a method of adjusting compensation parameters in the fifth embodiment;

FIG. 14 is a block diagram schematically showing the structure of a sixth embodiment applied to the optical disk apparatus of the invention;

FIG. 15 is a flow chart illustrating a method of adjusting compensation parameters in the sixth embodiment;

FIG. 16 is a block diagram schematically showing the structure of another embodiment applied to the optical disk apparatus of the invention;

FIG. 17 is a block diagram schematically showing the structure of another embodiment applied to the optical disk apparatus of the invention;

FIG. 18 is a block diagram schematically showing the structure of another embodiment applied to the optical disk apparatus of the invention;

FIGS. 19A and 19B show closed-loop characteristics in a case where an unstable oscillation mode is present above a control band; and

FIG. 20 is a block diagram schematically showing the structure of another embodiment applied to the optical disk apparatus of the invention.

Embodiments of an optical disk apparatus of the present invention and an adjustment method applied to the optical disk apparatus will now be described with reference to the accompanying drawings.

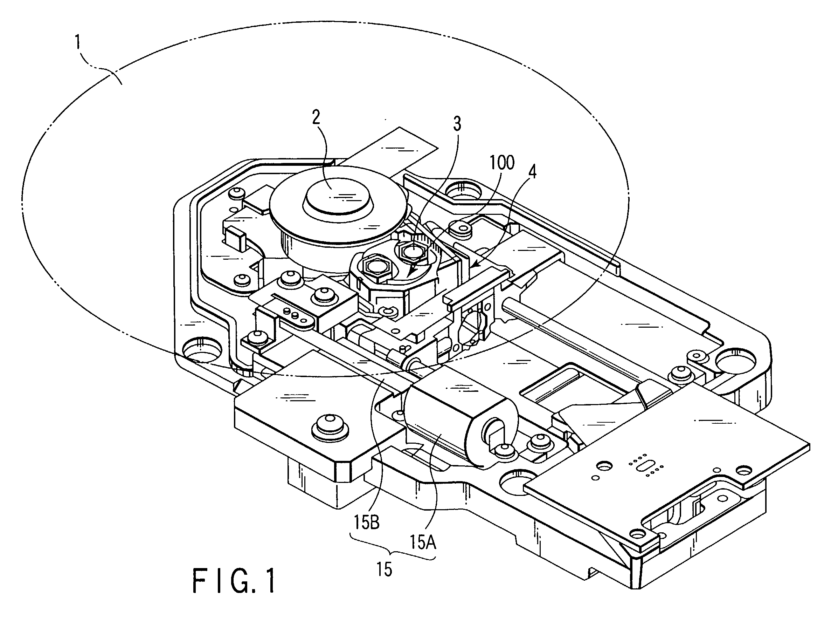

FIG. 1 schematically shows an example of the structure of the optical disk apparatus according to the present invention.

As is shown in FIG. 1, the optical disk apparatus comprises a disk motor 2 which rotates at a predetermined number of revolutions and on which an optical disk 1 having information recordable/ reproducible land tracks and groove tracks is loaded; an objective lens 2 for converging a beam from a light source to the optical disk 1; and an objective lens driving apparatus 100 for driving the objective lens 3 in a focusing direction parallel to the optical axis of the objective lens 3 and in a tracking direction, i.e. a radial direction of the optical disk 1, which is perpendicular to the focusing direction.

The objective lens driving apparatus 100 comprises an optical head 4 having a driving mechanism for driving an objective lens holder 16 in the focusing and tracking directions, and a coarse-positioning mechanism 15 for driving the optical head 4 in the radial direction of the optical disk 1. The coarse-movement mechanism 15 comprises a feed motor 15A and a feed screw 15B.

A first embodiment applied to the optical disk apparatus of the invention will now be described.

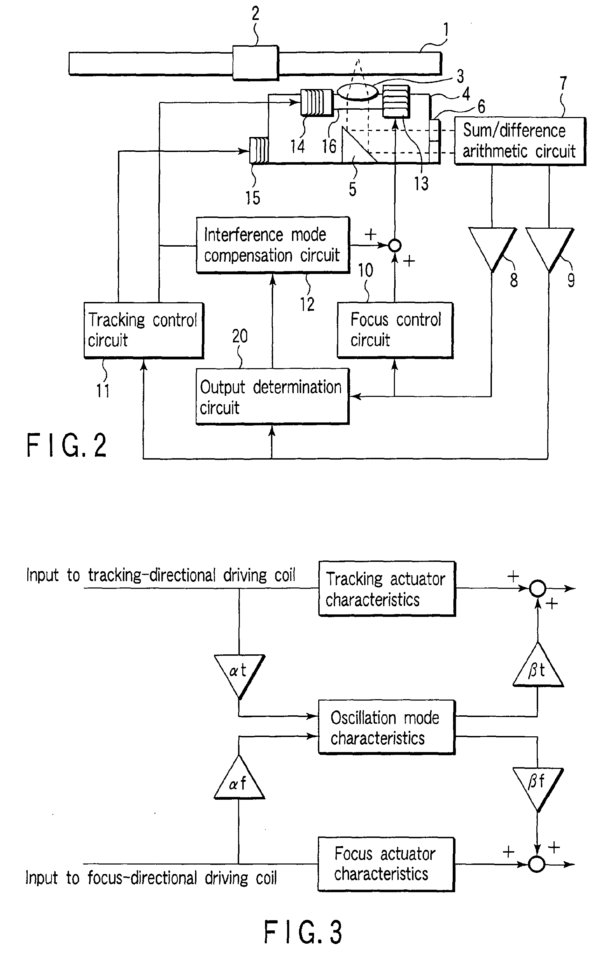

FIGS. 2 and 3 show the first embodiment of the present invention.

As is shown in FIG. 2, the optical disk apparatus comprises an objective lens 3; an optical head 4; a raised mirror 5, a photodetector 6, a sum/difference arithmetic circuit 7, a focus error signal amplifier 8; a tracking error signal amplifier 9; a focus control circuit 10; a tracking control circuit 11; an interference mode compensation circuit 12; a focus-direction drive coil (focusing coil) 13; a tracking-direction drive coil (tracking coil) 14; a coarse-positioning mechanism 15; an objective lens holder 16; and an output determination circuit 20.

The photodetector 6, sum/difference arithmetic circuit 7 and focus error signal amplifier 8 function as focus detection means for detecting focus-directional movement of the objective lens holder 16. The photodetector 6, sum/difference arithmetic circuit 7 and tracking error signal amplifier 9 function as track detection means for detecting track-directional movement of the objective lens holder 16.

The focus-directional drive coil 13 drives the objective lens holder 16 in the focusing direction. The tracking-directional drive coil 14 drives the objective lens holder 16 in the tracking direction.

The focus control circuit 10, tracking control circuit 11 and interference mode compensation circuit 12 function as control means for processing output signals from the focus error signal amplifier 8 and tracking error signal amplifier 9, respectively, and delivering control signals to the focus-directional drive coil 13 and tracking-directional drive coil 14. At the same time, the focus control circuit 10, tracking control circuit 11 and interference mode compensation circuit 12 function as control means for subjecting at least one of the output signals from the focus error signal amplifier 8 and tracking error signal amplifier 9, and adding the resultant signal to the control signals to the focus-directional drive coil 13 and tracking-directional drive coil 14.

The output determination circuit 20 functions as determination means for temporarily limiting the functions of the control means when it determines that a disturbance component is mixed in the output signals from the focus error signal amplifier 8 and tracking error signal amplifier 9.

The focus control circuit 10 functions as focus control means for performing an arithmetic operation of the output signal from the focus error signal amplifier 8 and outputting a focus control signal to the focus-directional drive coil 13. The tracking control circuit 11 functions as tracking control means for performing an arithmetic operation of the output signal from the tracking error signal amplifier 9 and outputting a tracking control signal to the tracking-directional drive coil 14.

In the first embodiment, the interference mode compensation circuit 12 functions as compensation means for performing an arithmetic operation of the tracking control signal from the tracking control circuit 11 and adding the resultant signal to the focus control signal.

As is shown in FIG. 2, the optical disk 1 and objective lens 3 are spaced apart at a short distance. The objective lens 3 is held by the objective lens holder 16. The focus-directional drive coil 13 and tracking-directional drive coil 14 are disposed near the objective lens holder 16.

The optical head 4 comprises the objective lens 3, objective lens holder 16, focus-directional drive coil 13, tracking-directional drive coil 14 and raised mirror 5. The optical head 4 is provided with the coarse-positioning mechanism 15 for coarsely positioning the objective lens 3 (the objective lens holder 16 or optical head 4) and the photodetector 6.

A light beam made incident on the optical disk 1 via the objective lens 3 is reflected by an information recording surface of the rotating optical disk 1. The reflected beam passes through the objective lens 3, is reflected by the raised mirror 5, and enters the photodetector 6. The photodetector 6 comprises a plurality of division cells. A signal corresponding to the intensity of light input from these cells is delivered to the sum/difference arithmetic circuit 7. The signal input to the sum/difference arithmetic circuit 7 is subjected therein to arithmetic operations and divided into a focus error signal corresponding to a focus error and a tracking error signal corresponding to a position error amount relative to a target track in the tracking direction.

The focus error signal is supplied to the focus error signal amplifier 8. The focus error signal is amplified by the focus error signal amplifier 8 and input to the focus control circuit 10.

The tracking error signal is supplied to the tracking error signal amplifier 9. The tracking error signal is amplified by the tracking error signal amplifier 9 and input to the tracking control circuit 11.

Based on the tracking error signal output from the tracking error signal amplifier 9, the tracking control circuit 11 performs arithmetic operations to produce a coarse-positioning drive signal and a fine-positioning drive signal as tracking control signals.

The coarse-positioning drive signal is input to the coarse-positioning mechanism 15. The coarse-positioning drive signal is a drive signal composed mainly of frequency components of 1 kHz or less. The fine-positioning drive signal serving as the track control is input to the tracking-directional drive coil 14 of the objective lens driving apparatus 100, which is the fine-positioning mechanism, and at the same time to the interference mode compensation circuit 12. The fine-positioning drive signal is a drive signal composed mainly of frequency components of up to about 5 kHz.

Based on the coarse-positioning drive signal, the coarse-positioning mechanism 15 roughly positions the optical head 4 relative to the optical disk 1. In addition, based on the fine-positioning drive signal, the tracking-directional drive coil 14 positions the objective lens 3 (objective lens holder 16) at the target track.

On the other hand, based on the focus error signal from the focus error signal amplifier 8, the focus control circuit 10 performs arithmetic operations to produce a focus drive signal as a focus control signal. The focus drive signal from the focus control circuit 10 is input to the focus-directional drive coil 13 of the objective lens driving apparatus 100. The focus-directional drive coil 13 is thus actuated to vertically position the objective lens 3 relative to the optical disk 1. Accordingly, a beam spot is focused on the information recording surface of the optical disk 1.

In this case, there is a possibility that the objective lens 3 may oscillate due to the drive signal input to the tracking-directional drive coil 14. In order to cancel such oscillation, the interference mode compensation circuit 12 performs arithmetic operations for the drive signal to be input to the focus-directional drive coil 13.

More specifically, the interference mode compensation circuit 12 performs such arithmetic operations as to cancel an oscillation mode occurring due to the fine-positioning drive signal to the tracking-directional drive coil 14, by inputting the drive signal to the focus-directional drive coil 13. This drive signal is obtained by arithmetic operations based on frequency characteristics. The drive signal obtained by the arithmetic operations is added to the focus-directional drive signal output from the focus control circuit 10, and the added signal is applied to the focus-directional drive coil 13.

Based on the input drive signal, the focus-directional drive coil 13 performs the focusing operation at the target position.

The operations in the interference mode compensation circuit 12 will now be described with reference to FIG. 3 that illustrates the effects of an oscillation mode.

The arithmetic operations in the interference mode compensation circuit 12 are performed in consideration of the effects of the oscillation mode of the objective lens 3 (objective lens holder 16) upon the tracking-directional driving characteristics and focus-directional driving characteristics. FIG. 3 illustrates the effects of the oscillation mode upon the respective driving characteristics.

In FIG. 3, $\alpha t$ is the effect on the oscillation mode due to the input of the drive signal to the tracking-directional drive coil 14, $\alpha f$ is the effect on the oscillation mode due to the input of the drive signal to the focus-directional drive coil 13, and $\beta f$ and $\beta t$ are coefficients of effects detected by the photodetector 6 as focus-directional and tracking-directional shift amounts representing oscillations due to the oscillation mode. These four parameters determine the effect of the oscillation mode.

Based on the four parameters, the interference mode compensation circuit 12 performs arithmetic operations to produce frequency characteristics. In general terms, the frequency characteristics of the oscillation mode are very high, and are on the order of several kHz. It is thus desirable to produce such band-pass or high-pass characteristics as to pass the region of the frequency of the oscillation mode.

Ultimately, the effect of the oscillation mode near the control band is large. Thus, the pass frequencies in the interference mode compensation circuit 12 become those near the control band, e.g. about 1 kHz to 10 kHz.

Excitation of the oscillation mode can be suppressed by setting a gain G1 in the pass frequency region by the following equation:

$$G1 = (-\alpha t/\alpha f) \times K \qquad (1)$$

Wherein K is $0 \leqq K \leqq 1$, or $-1 \leqq K \leqq 1$, according to the polarity of the land tracking and groove tracking, as described below.

In some cases, a multiplication operation using a predetermined multiplier may be performed to produce all-pass characteristics. The predetermined multiplier may be set near the value given by equation (1).

In a case where a specific disturbance signal is mixed in the focus error signal or tracking error signal produced by the sum/difference arithmetic circuit 7, this state is determined by the output determination circuit 20.

Specifically, the output determination circuit 20 receives the focus error signal from the focus error signal amplifier 8 and the tracking error signal from the tracking error signal amplifier 9. The output determination circuit 20 determines whether a disturbance signal is mixed in the input focus error signal and tracking error signal.

The output determination circuit 20 temporarily prohibits the interference mode compensation circuit 12 from adding its output signal to the focus control signal in the following case. That is, the output determination circuit 20 prohibits this addition operation, when it has determined that a disturbance signal is mixed in the focus error signal and tracking error signal and that the addition of the tracking control signal to the focus control signal by the interference mode compensation circuit 12 will cause an adverse effect. In other words, the addition is prohibited in the case where an adverse affect will be caused if the output signal from the interference mode compensation circuit 12 is added as an input to the focus-directional drive coil 13. While the adding operation is being suspended, the value immediately before the suspension may be held and this value may be continuously added. Alternatively, the adding operation may not be performed at all, that is, the output of the interference mode compensation circuit 12 may be set at zero.

The disturbance signal in this context is, for example, a header signal mixed in the tracking error signal, or a jump signal produced at the time of track-jump. Thus, the disturbance signal is stabilized in a very short time period, or it is predictable because of its periodical mixing. In particular, as regards the predictable periodical disturbance signal, the output determination circuit 20 may be operated based on periodical estimation and a stable compensation control can be performed.

According to the above-described first embodiment, the tracking control signal from the tracking control circuit 11 is added to the focus control signal from the focus control circuit 10. Thereby, the oscillation of the objective lens 3 due to the tracking control signal input to the tracking-directional drive coil 14 is suppressed and compensated by the focus control signal input to the focus-directional drive coil 13. Thus, the oscillation of the objective lens 3 can be suppressed, and the objective lens 3 can be positioned with high precision even in a case where the recording density is enhanced.

A second embodiment applied to the optical disk apparatus of the present invention will now be described.

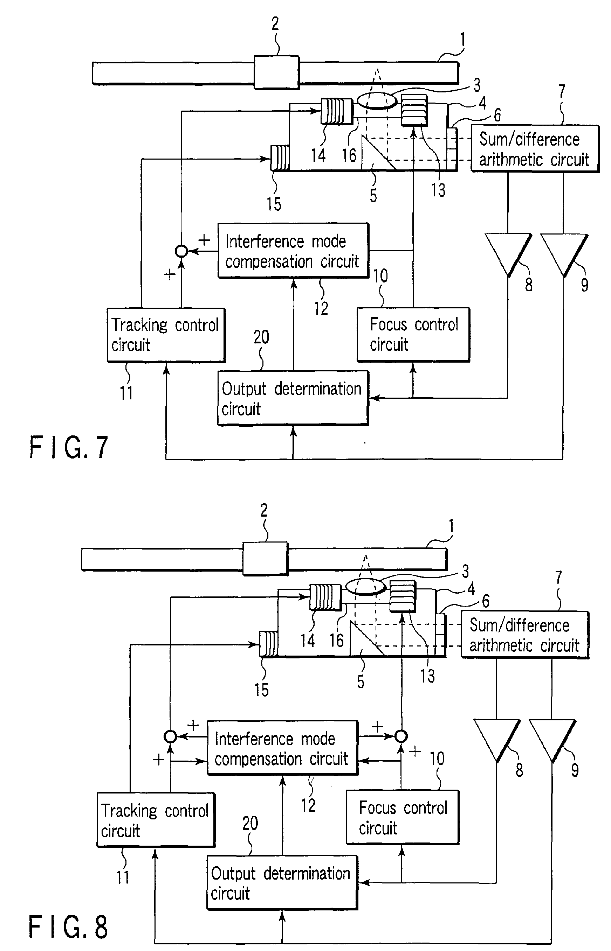

FIG. 7 shows the second embodiment of the invention.

In the following embodiments to be described below, the common structural elements are denoted by like reference numerals, and a detailed description thereof is omitted.

The second embodiment is characterized in that the tracking-directional drive coil 14 is actuated using the focus control signal output from the focus control circuit 10, thereby suppressing oscillation of the objective lens 3.

In the second embodiment, as shown in FIG. 7, the interference mode compensation circuit 12 functions as compensation means for arithmetically processing the focus control signal from the focus control circuit 10 and adding the resultant to the tracking control signal.

The drive signal to be input to the interference mode compensation circuit 12 is the focus control signal output from the focus control circuit 10. The drive signal, which is produced from the interference mode compensation circuit 12 by arithmetic operations to suppress the oscillation of the objective lens 3, is added to the drive signal from the tracking control circuit 11 and the added signal is applied to the tracking-directional drive coil 14. The other respects in the structures and operations are the same as those in the first embodiment.

The interference mode compensation circuit 12 performs the same arithmetic operations as in the first embodiment. Satisfactory operations can be achieved if a gain G2 in the pass frequency region is set by

$$G2 = (-\alpha f/\alpha t) \times K \qquad (2)$$

Like the first embodiment, the output determination circuit 20 temporarily prohibits the interference mode compensation circuit 12 from adding its output signal to the tracking control signal from the tracking control circuit 11, if it has determined that a disturbance signal is mixed in the focus error signal from the focus error signal amplifier 8 and the tracking error signal from the tracking error signal amplifier 9.

As has been described above, according to the second embodiment, the focus control signal from the focus control circuit 10 is added to the tracking control signal from the tracking control circuit 11. Thereby, the oscillation of the objective lens 3 due to the focus control signal input to the focus-directional drive coil 13 is suppressed and compensated by the tracking control signal input to the tracking-directional drive coil 14. Thus, the oscillation of the objective lens 3 can be suppressed, and the objective lens 3 can be positioned with high precision even in a case where the recording density is enhanced.

A third embodiment applied to the optical disk apparatus of the present invention will now be described.

FIG. 8 shows the third embodiment of the invention.

The third embodiment is characterized in that the focus-directional drive coil 13 is actuated using the tracking control signal output from the tracking control circuit 11, and the tracking-directional drive coil 14 is actuated using the focus control signal output from the focus control circuit 10, thereby suppressing oscillation of the objective lens 3.

In the third embodiment, as shown in FIG. 8, the interference mode compensation circuit 12 functions as compensation means for arithmetically processing the tracking control signal from the tracking control circuit 11 and adding the resultant to the focus control signal, and for arithmetically processing the focus control signal from the focus control circuit 10 and adding the resultant to the tracking control signal.

The drive signals to be input to the interference mode compensation circuit 12 are the focus control signal output from the focus control circuit 10 and the tracking control signal output from the tracking control circuit 11. The drive signals for suppressing the oscillation of the objective lens 3 are produced in the interference mode compensation circuit 12 by arithmetic operations.

The drive signal for suppressing the oscillation, which is produced from the interference mode compensation circuit 12 by arithmetic operations based on the focus control signal from the focus control circuit 10, is added to the tracking control signal from the tracking control circuit 11 and the added signal is applied to the tracking-directional drive coil 14.

The drive signal for suppressing the oscillation, which is produced from the interference mode compensation circuit 12 by arithmetic operations based on the tracking control signal from the tracking control circuit 11, is added to the focus control signal from the focus control circuit 10 and the added signal is applied to the focus-directional drive coil 13.

The other respects in the structures and operations are the same as those in the first embodiment.

Like the first embodiment, the output determination circuit 20 temporarily prohibits the interference mode compensation circuit 12 from adding the focus control signal to the tracking control signal and from adding the tracking control signal to the focus control signal, if it has determined that a disturbance signal is mixed in the focus error signal from the focus error signal amplifier 8 and the tracking error signal from the tracking error signal amplifier 9.

As has been described above, according to the third embodiment, the drive signal arithmetically obtained to suppress the excitation of the oscillation mode, that is, the focus control signal from the focus control circuit 10, is added to the tracking control signal from the tracking control circuit 11. In addition, the tracking control signal from the tracking control circuit 11 is added to the focus control signal from the focus control circuit 10. Thereby, the oscillation of the objective lens 3 is suppressed and compensated. Thus, the oscillation of the objective lens 3 can be suppressed, and the objective lens 3 can be positioned with high precision even in a case where the recording density is enhanced.

A fourth embodiment applied to the optical disk apparatus of the invention will now be described.

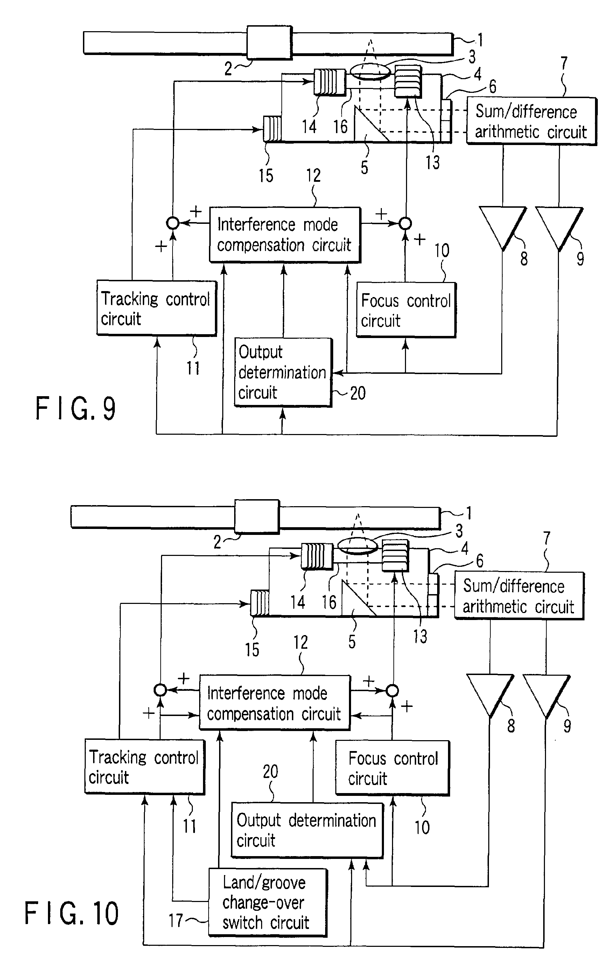

FIG. 9 shows the fourth embodiment of the invention.

The fourth embodiment is characterized in that the focus error signal from the focus error signal amplifier 8 and the tracking error signal from the tracking error signal amplifier 9 are directly input to the interference mode compensation circuit 12.

In the fourth embodiment, as shown in FIG. 9, the interference mode compensation circuit 12 functions as compensation means for arithmetically processing the tracking error signal from the tracking error signal amplifier 9 and adding the resultant to the focus control signal from the focus control circuit 10, and for arithmetically processing the focus error signal from the focus error signal amplifier 8 and adding the resultant to the tracking control signal from the tracking control circuit 11.

As is shown in FIG. 9, the focus error signal output from the focus error signal amplifier 8 is delivered to the focus control circuit 10 and interference mode compensation circuit 12. The tracking error signal output from the tracking error signal amplifier 9 is delivered to the tracking control circuit 11 and interference mode compensation circuit 12.

Based on the input focus error signal and tracking error signal, the interference mode compensation circuit 12 produces such drive signals by arithmetic operations as to suppress oscillations of the objective lens 3.

The drive signal, which is produced by arithmetic operations based on the focus error signal, is added to the tracking control signal from the tracking control circuit 11 and the added signal is applied to the tracking-directional drive coil 14.

The drive signal, which is produced by arithmetic operations based on the tracking error signal, is added to the focus control signal from the focus control circuit 10 and the added signal is applied to the focus-directional drive coil 13.

The arithmetic operations based on the focus error signal may be those for effecting the same phase compensation as the focus control circuit 10 after multiplying the focus error signal by the gain of equation (1). If this structure is adopted, the same phase compensation arithmetic portion as the focus control circuit 10 can be shared by the focus control circuit 10.

The other respects in the structures and operations are the same as those in the first embodiment.

Like the first embodiment, the output determination circuit 20 temporarily prohibits the interference mode compensation circuit 12 from adding the drive signals for suppressing the oscillation mode to the tracking control signal and the focus control signal, if it has determined that a disturbance signal is mixed in the focus error signal from the focus error signal amplifier 8 and the tracking error signal from the tracking error signal amplifier 9.

As has been described above, according to the fourth embodiment, the drive signals arithmetically obtained to suppress the excitation of the oscillation mode are added to the tracking control signal from the tracking control circuit 11 and to the focus control signal from the focus control circuit 10. Thereby, the oscillation of the objective lens 3 is suppressed and compensated. Thus, the oscillation of the objective lens 3 can be suppressed, and the objective lens 3 can be positioned with high precision even in a case where the recording density is enhanced.

With this structure, if a correlation spectrum between the track control signal and the focus control signal is to be obtained, it is possible to acquire a correlation spectrum corresponding to the arithmetic operations by the interference mode compensation circuit 12.

Normally, a correlation spectrum of an optical disk rotation sync component is large. However, with the structure of the present embodiment, a spectrum near the oscillation mode frequency can be increased.

In this embodiment, the output of the interference mode control circuit 12 is added to the front stage of the input of the coil, that is, to the output signals of the tracking control circuit 11 and focus control circuit 10. Thereby, the effect of the oscillation mode, which the objective lens holder 16 possesses as a mechanical factor, can be effectively suppressed.

In another example of the structure, the output from the interference mode compensation circuit 12 may be added to the output signals from the focus error signal amplifier 8 and tracking error signal amplifier 9, and the added signals may be input to the focus control circuit 10 and tracking control circuit 11.

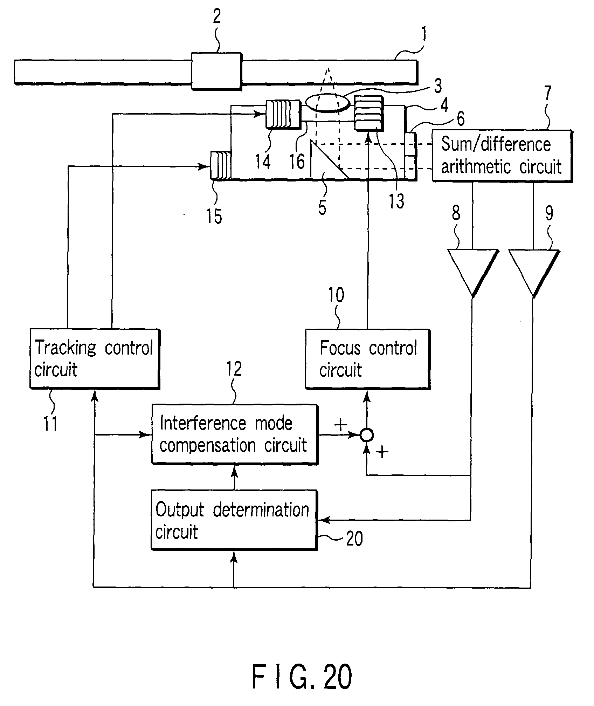

FIG. 20 shows an example of this structure. In this example, the tracking error signal from the tracking error signal amplifier 9 is directly input to the interference mode compensation circuit 12. A signal for suppressing the oscillation mode, which is output from the interference mode compensation circuit 12, is added to the output from the focus error signal amplifier 8. The added focus error signal is input to the focus control circuit 10. The focus control circuit 10 performs arithmetic operations to produce the control signal to the focus-directional drive coil 13. In this case, the excitation of the oscillation mode can be suppressed by setting a gain G3 in the pass frequency region of the interference mode compensation circuit 12 as follows:

$$G3 = (-\alpha t/\alpha f) \times K (\omega t/\omega f)^2$$

wherein $\omega t$ is the frequency of the tracking control band, and $\omega f$ is the frequency of the focus control band.

A fifth embodiment applied to the optical disk apparatus of the invention will now be described.

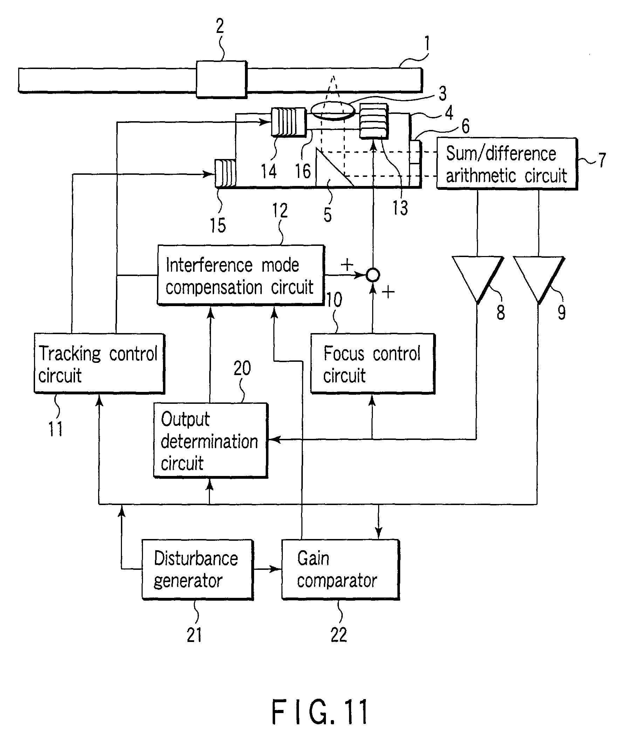

FIG. 11 shows the fifth embodiment of the invention.

In the above-described embodiments, the gain parameters of the interference mode compensation circuit 12, as expressed by equations (1) and (2), will, in fact, vary slightly due to a variance in characteristics of objective lens driving apparatuses as employed. The effect of the interference mode, as shown in FIG. 6, is observed as a delay or a progress of phase. Thus, a sine-wave signal of a frequency, at which a variation in phase is expected, may be intentionally mixed in a control loop with a small amplitude, and a phase difference of the frequency component of the mixed sine-wave signal relative to the input sine-wave signal in the response may be measured. Thereby, the effect of the interference mode can be estimated.

The fifth embodiment, as shown in FIG. 11, comprises a disturbance generator 21 functioning as disturbance generation means for generating a sine-wave disturbance signal of a predetermined frequency and mixing this disturbance signal into the track error signal output from the tracking error signal amplifier 9, and a gain comparator 22 functioning as gain comparison means for monitoring the tracking error signal output from the tracking error signal amplifier 9, and comparing the amplitude of this tracking error signal with the amplitude of the disturbance signal generated by the disturbance generator 21, thereby observing the gain of the closed loop of the control circuit.

The gain comparator 22 can also function as adjustment means for adjusting a compensation coefficient of the arithmetic process in the interference mode compensation circuit 12 in accordance with the comparison result of the gain.

Specifically, in the fifth embodiment, as shown in FIG. 11, a sine-wave disturbance signal of a predetermined frequency is mixed in the tracking error signal that is to be input to the tracking control circuit 11. This predetermined frequency may be set near a pre-known frequency of a resonance mode. If the control band is near 5 kHz, the predetermined frequency is in the range of 1 kHz to 10 kHz, which may affect the control.

The disturbance signal generated from the disturbance generator 21 is also input to the gain comparator 22. The gain comparator 22 monitors the input disturbance signal and the tracking error signal from the tracking error signal amplifier 9 and thus compares the amplitudes of the respective signals.

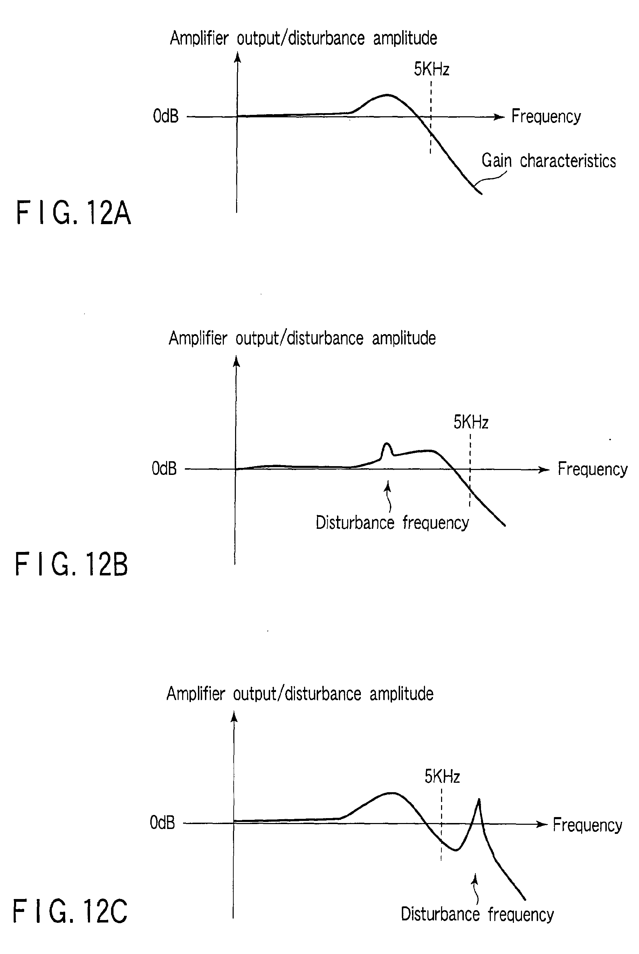

If the control band of the tracking control system is about 5 kHz or less, the transmission characteristics of the stable closed loop are obtained, as shown in FIG. 12A.

On the other hand, the effects of a resonance mode occurring at frequencies other than the control band of 5 kHz are observed, as shown in FIGS. 12B and 12C. Since the ratio of the amplitude of the output signal from the tracking error signal amplifier 9 to the amplitude of the disturbance signal differs from a predetermined value, it can be detected that the tracking control is unstable.

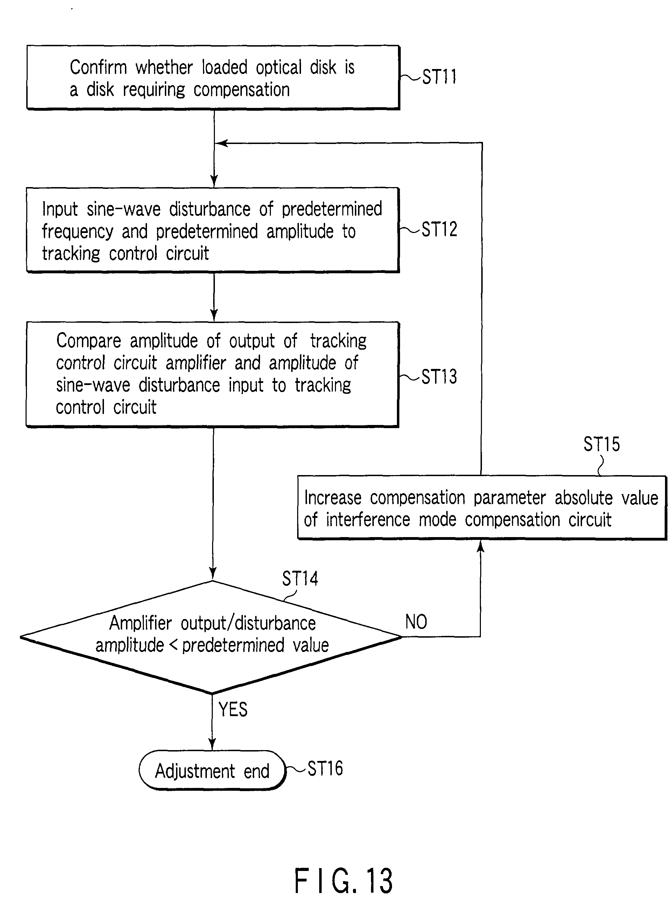

A specific adjustment method will now be described with reference to a flow chart of FIG. 13.

As is illustrated in FIG. 13, it is determined whether the optical disk loaded on the optical disk apparatus is an optical disk that may be affected by the interference mode (ST11).

For example, in the case of an optical disk having information recordable/reproducible land tracks and groove tracks on an information recording surface, high-density information recording/reproduction is performed. Accordingly, this type of optical disk is particularly susceptible to the interference mode. In step ST11, it is determined whether the loaded optical disk is the optical disk having the land tracks and groove tracks. If the loaded optical disk is the disk of this type, the compensation control is adjusted.

Subsequently, the disturbance generator 21 inputs the disturbance sine-wave signal of a predetermined frequency to the tracking control circuit 11 (ST12). Specifically, the disturbance sine-wave signal is mixed in the tracking error signal output from the tracking error signal amplifier 9. At this time, it is preferable that the input amplitude be a voltage amplitude of about several-ten mV so that the tracking operation may not become unstable due to excessively large disturbance.

The gain comparator 22 then monitors the amplitude of the predetermined frequency component of the tracking error signal output from the tracking error signal amplifier 9, and compares it with the amplitude of the mixed disturbance sine-wave signal (ST13). In this comparing operation, the result obtained by dividing the amplitude value of the amplifier output signal by the amplitude value of the input disturbance signal is compared with a predetermined value. The predetermined value is set by the response gain of the closed loop of the stable tracking control system shown in FIG. 12A.

Subsequently, if the comparison result of the gain comparator 22 shows that the result of the division is less than the predetermined value ("YES" in step ST14), it is determined that the compensation parameter of the arithmetic process in the interference mode compensation circuit 12 is proper, and the adjustment is completed.

On the other hand, if the comparison result of the gain comparator 22 shows that the result of the division is greater than the predetermined value ("NO" in step ST14), it is determined that the tracking control system is unstable. Accordingly, the absolute value of the compensation parameter of the arithmetic process by the interference mode compensation circuit 12 is increased (ST15). The result is confirmed and if there is adverse effect, that is, if the value of the compensation parameter was excessively increased, this value is decrease. Then, and the control returns to step ST12 to perform adjustment.

In the above description, the adjustment method employs only the tracking control circuit 11. However, the same adjustment may be carried out using the focus control circuit 10. In addition, the adjustment may be performed using both the result of the land tracking and the result of the groove tracking.

As has been described above, according to the fifth embodiment, the compensation parameter for compensating the oscillation of the objective lens 3 can always be adjusted to be a proper value. Therefore, the oscillation of the objective lens 3 can be suppressed, and the objective lens 3 can be positioned with high precision even in a case where the recording density is enhanced.

A sixth embodiment applied to the optical disk apparatus of the invention will now be described.

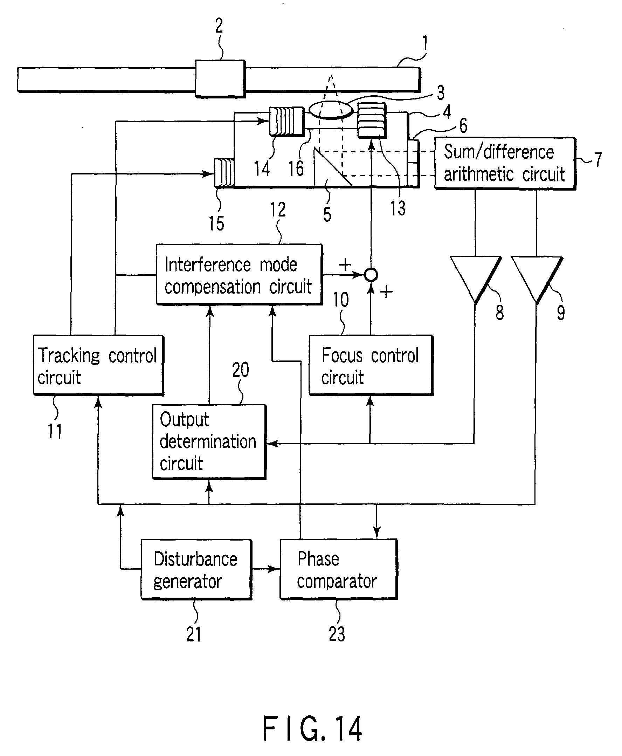

FIG. 14 shows the sixth embodiment of the invention.

The sixth embodiment, as shown in FIG. 14, comprises a disturbance generator 21 functioning as disturbance generation means for generating a sine-wave disturbance signal of a predetermined frequency and mixing this disturbance signal into the track error signal output from the tracking error signal amplifier 9, and a phase comparator 23 functioning as phase comparison means for monitoring the tracking error signal output from the tracking error signal amplifier 9, and comparing the phase of this tracking error signal with the phase of the disturbance signal generated by the disturbance generator 21, thereby observing the phase of the closed loop of the control circuit.

The phase comparator 23 can also function as adjustment means for adjusting a compensation coefficient of the arithmetic process in the interference mode compensation circuit 12 in accordance with the comparison result of the phase.

Specifically, in the sixth embodiment, as shown in FIG. 14, a sine-wave disturbance signal of a predetermined frequency is mixed in the tracking error signal that is to be input to the tracking control circuit 11. This predetermined frequency may be set near a pre-known frequency of a resonance mode. If the control band is near 5 kHz, the predetermined frequency is in the range of 1 kHz to 10 kHz, which may affect the control.

The disturbance signal generated from the disturbance generator 21 is also input to the phase comparator 23. The phase comparator 23 monitors the input disturbance signal and the tracking error signal from the tracking error signal amplifier 9 and thus compares the phases of the respective signals.

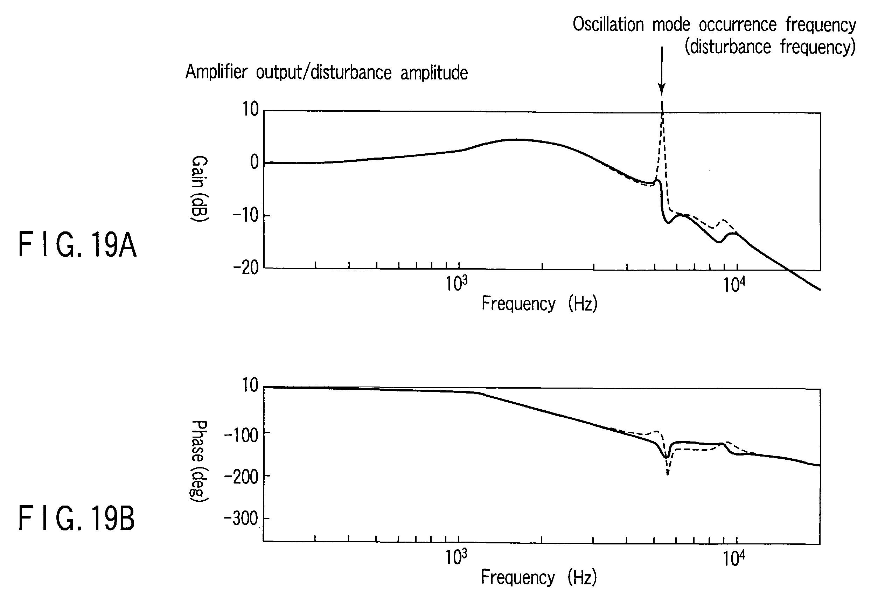

The transmission characteristics of the control system in this case will now be described with reference to FIGS. 19A and 19B. FIGS. 19A and 19B show closed-loop characteristics having an unstable oscillation mode above the control band. At the frequencies of the unstable oscillation mode, the gain characteristics vary greatly and the phase characteristics vary steeply. The variation in phase can be detected by the phase comparator 23, and the parameter can be adjusted to provide a predetermined phase.

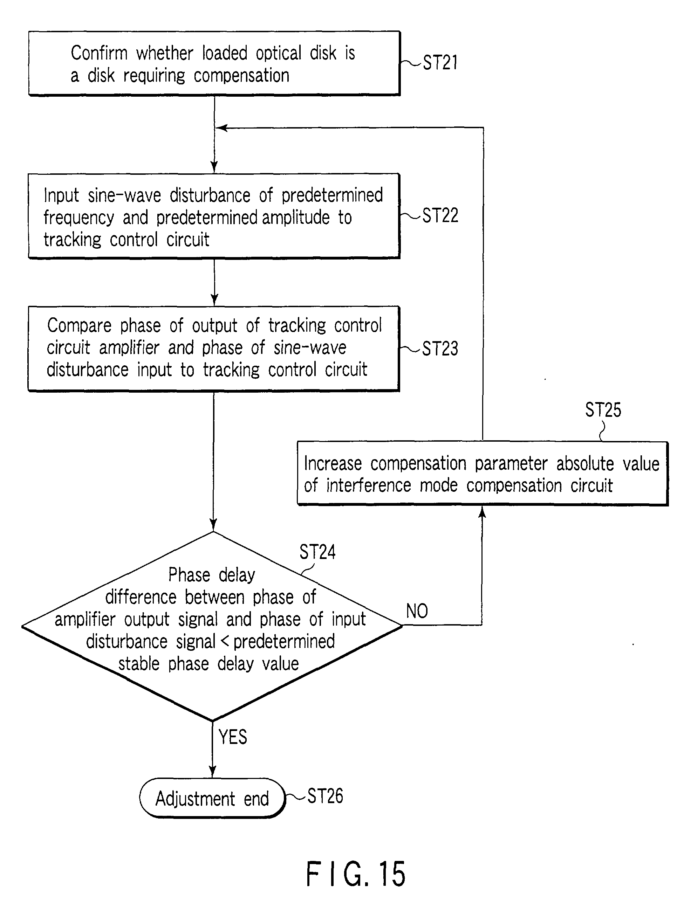

A specific adjustment method will now be described with reference to a flow chart of FIG. 15.

As is illustrated in FIG. 15, it is determined whether the optical disk loaded on the optical disk apparatus is an optical disk that may be affected by the interference mode (ST21).

For example, in the case of an optical disk having information recordable/reproducible land tracks and groove tracks on an information recording surface, high-density information recording/reproduction is performed. Accordingly, this type of optical disk is particularly susceptible to the interference mode. In step ST21, it is determined whether the loaded optical disk is the optical disk having the land tracks and groove tracks. If the loaded optical disk is the disk of this type, the compensation control is adjusted.

Subsequently, the disturbance generator 21 inputs the disturbance sine-wave signal of a predetermined frequency to the tracking control circuit 11 (ST22). Specifically, the disturbance sine-wave signal is mixed in the tracking error signal output from the tracking error signal amplifier 9.

The phase comparator 23 then monitors the phase of the predetermined frequency component of the tracking error signal output from the tracking error signal amplifier 9, and compares it with the phase of the mixed disturbance sine-wave signal (ST23). In this comparing operation, the phase delay difference between the phase of the amplifier output signal and the phase of the input disturbance signal is compared with a predetermined stable phase delay value. In order not to lose a phase margin for the stable control, it is preferable that the difference value between the phase delay difference and the predetermined stable phase delay value be about 20 degrees.

Subsequently, if the comparison result of the phase comparator 23 shows that the absolute value of the phase difference is less than the predetermined value ("YES" in step ST24), it is determined that the compensation parameter of the arithmetic process in the interference mode compensation circuit 12 is proper, and the adjustment is completed.

On the other hand, if the comparison result of the phase comparator 23 shows that the absolute value of the phase difference is greater than the predetermined value ("NO" in step ST24), it is determined that the tracking control system is unstable. Accordingly, the absolute value of the compensation parameter of the arithmetic process by the interference mode compensation circuit 12 is increased (ST25), and the control returns to step ST22 to perform adjustment.

In the above description, the adjustment method employs only the tracking control circuit 11. However, the same adjustment may be carried out using the focus control circuit 10. In addition, the adjustment may be performed using both the result of the land tracking and the result of the groove tracking.

As has been described above, according to the sixth embodiment, the compensation parameter for compensating the oscillation of the objective lens 3 can always be adjusted to be a proper value. Therefore, the oscillation of the objective lens 3 can be suppressed, and the objective lens 3 can be positioned with high precision even in a case where the recording density is enhanced.

This adjustment method, however, may be used as a method of adjusting the gain itself of the tracking control or focusing control by inputting a sine-wave disturbance near the control band. In this case, the sine-wave disturbance of a frequency near the control band is inserted, and the gain comparison or phase comparison is performed. Thus, the gain of the tracking control circuit 11 or focusing control circuit 10 is adjusted.

On the other hand, in the fifth and sixth embodiments, what is to be adjusted is limited to the compensation parameter of the interference mode compensation circuit 12, and the gain adjustment is performed separately. In fact, after the tracking control circuit 11 and focus control circuit 10 are adjusted by known means, the compensation parameter of the interference mode compensation circuit 12 is adjusted.

By setting the compensation parameter in this way, it becomes possible to realize a proper compensation control matching with a variance in characteristics of individual apparatuses.

In order to cope with a variance in characteristics of apparatuses, it should suffice if the measurement by the gain comparison or phase comparison is performed at the time of shipment. In order to cope with a variation over time, inspections may be performed periodically. It is also possible to perform inspections each time the optical disk is loaded.

Because of characteristics of optical disks, when a peripheral portion of an optical disk is being tracked, there occurs a great disturbance such as wobbling of the surface of the disk, and the control system tends to become unstable. Taking this into account, the interference mode compensation circuit 12 may be once adjusted with respect to an inner peripheral portion of the optical disk (approximately less than 5 mm from the innermost portion), and then similar adjustment may be performed with respect to an outer peripheral portion of the optical disk (approximately less than 5 mm from the outermost portion). Thereby, average values of adjustment may be used as compensation parameters.

Moreover, the adjustment results for the inner peripheral portion and outer peripheral portion may be stored, and the adjustment parameters may be optimally varied in accordance with the tracking position.

In step ST11, the determination is not limited to that as to whether the loaded disk is a disk having land tracks and groove tracks. It may be determined whether the loaded disk is a disk of a pre-registered kind, which requires compensation.

With these structures, more stable, proper compensation controls can be realized.

A seventh embodiment applied to the optical disk apparatus of the invention will now be described.

FIG. 10 shows the seventh embodiment of the invention.

The seventh embodiment is characterized by the provision of a land/groove change-over switch circuit 17.

FIG. 10 is a block diagram showing the structure of the seventh embodiment. An output of the land/groove change-over switch circuit 17 is connected to the tracking control circuit 11 and interference mode compensation circuit 12.

The optical disk 1 has land tracks and groove tracks as information recording tracks, i.e. groove portions and ridge portions of tracks. Information can be recorded/reproduced on/from both the tracks. When tracking positioning is performed for the optical disk 1, the polarity of a tracking error signal associated with the land tracks is reverse to that of a tracking error signal associated with the groove tracks.

This is because the polarities of position error signals per se, which are detected while the groove portion and ridge portion are being tracked, are reverse to each other. The land/groove change-over switching circuit 17 is provided to correct this reversion.

For example, if the oscillation mode of the objective lens 3 acts to delay the phase of the positioning control system while the land track is being tracked, the focus control circuit 10 and tracking control circuit 11 function to progress the phase of the positioning control system by reversing the polarity of the position error signal obtained while the groove track is being tracked.

Thus, when the delay in phase makes the operations of each control circuit and each coil considerably unstable, the land/groove change-over switch circuit 17 controls the interference mode compensation circuit 12 so as to make it operable, for example, only at the time of land tracking.

Alternatively, the land/groove change-over switch circuit 17 may control the interference mode compensation circuit 12 so as to make it operable only at the time of groove tracking. Besides, a certain kind of oscillation mode may cause the same phase delay in the land tracking and groove tracking. In such a case, the polarity of the output signal from the interference mode compensation circuit 12 can be changed.

Like the first embodiment, the output determination circuit 20 temporarily prohibits the interference mode compensation circuit 12 from adding the drive signals for suppressing the oscillation mode to the tracking control signal and the focus control signal, if it has determined that a disturbance signal is mixed in the focus error signal from the focus error signal amplifier 8 and the tracking error signal from the tracking error signal amplifier 9.

As has been described above, according to the seventh embodiment, even where the polarity of the tracking error signal is reversed, the land/groove change-over switch circuit 17 is activated to control either the land tracking or the groove tracking.

The drive signal arithmetically obtained to suppress the excitation of the oscillation mode, that is, the focus control signal from the focus control circuit 10, is added to the tracking control signal from the tracking control circuit 11. In addition, the tracking control signal from the tracking control circuit 11 is added to the focus control signal from the focus control circuit 10. Thereby, the oscillation of the objective lens 3 is suppressed and compensated.

Accordingly, the oscillation of the objective lens 3 can be suppressed, and the objective lens 3 can be positioned with high precision even in a case where the recording density is enhanced.

In a case where the direction (polarity) of the phase is reversed between the land tracking and groove tracking, as in the seventh embodiment, it is desirable to optimally set the gain parameters in the interference mode compensation circuit 12 by performing phase comparisons at the time of both land tracking control and groove tracking control.

In this case, the phase difference is detected by the same phase comparison as in the sixth embodiment in both the tracking states. The parameters are thus set to make the phase difference at the time of the land tracking control identical to the phase difference at the time of the groove tracking control, that is, to equalize the phases in the land tracking and groove tracking.

This setting can effectively reduce the effect of the interference mode which reverses the phases in the land tracking and groove tracking.

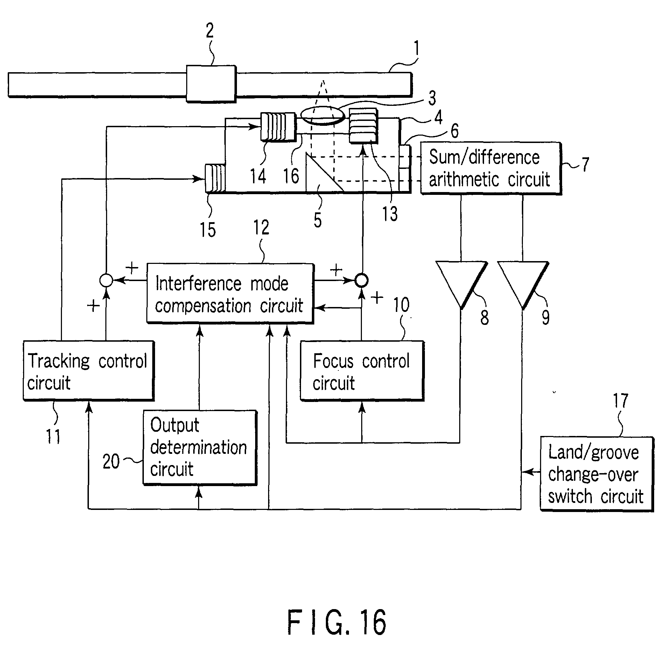

In the seventh embodiment, the output of the land/groove change-over switch circuit 17 is connected to the tracking control circuit 11 and interference mode compensation circuit 12. However, as shown in FIG. 16, the output of the land/groove change-over switch circuit 17 may be applied to the output signal from the tracking error signal amplifier 9, which is delivered to the tracking control circuit 11, interference mode compensation circuit 12 and output determination circuit 20.

In the structure shown in FIG. 16, the polarity in the land tracking and groove tracking is changed by the output signal from the tracking error signal amplifier 9, that is, the tracking error signal. Thus, there is no need to change the polarity in the interference mode compensation circuit 12, and the control can be made simpler.

It should suffice if the output determination circuit 20 can detect only the mixing of disturbance in the tracking error signal output from the tracking error signal amplifier 9. Thus, as shown in FIG. 16, the output determination circuit 20 can detect the mixing of disturbance on the basis of the tracking error signal alone.

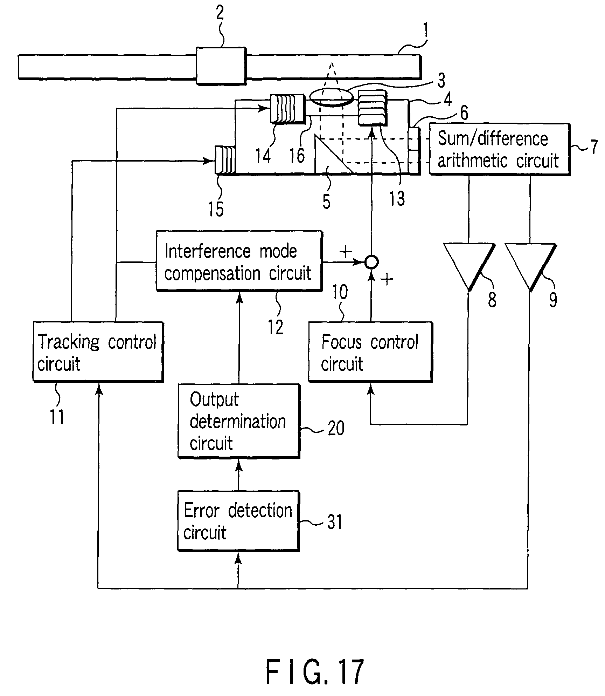

FIG. 17 shows a structure including an error detection circuit 31 for detecting a tracking control error, aside from the detection of disturbance in the tracking error signal from the tracking error signal amplifier 9. With this structure, it is possible to quickly detect a state in which the tracking control has become unstable unexpectedly, and to enable the output determination circuit 20 to restrict the operations of the interference mode compensation circuit 12.

The unstable tracking control can be detected by determining that an input, which does not occur in a stable tracking state, for example, an input with an amplitude of 1V, has been delivered to the tracking control circuit 11.

A header signal is indicative of an address of an information sector on the information recording track. The header signal is a rectangular-wave-like disturbance signal mixing in the tracking error signal. The header signal can be detected by detecting a rising edge of a rectangular wave, or by using an address reading circuit or some other signal that can be arithmetically processed by the sum/difference arithmetic circuit 7. Since the header signal occurs at substantially the same cycle, it can be detected at a predetermined timing if it is once detected.

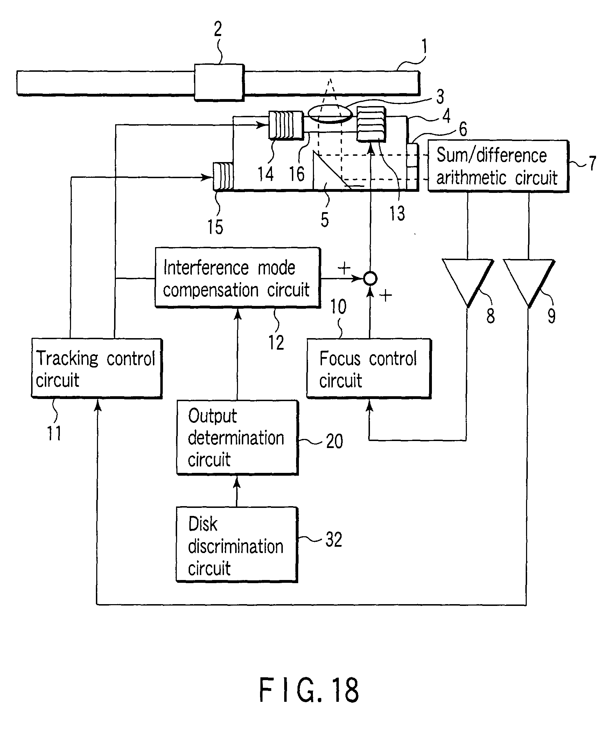

FIG. 18 shows a structure including a disk discrimination circuit 32 for discriminating an optical disk of a kind that does not require the operation of the interference mode compensation circuit 12. With this structure, if the disk discrimination circuit has determined that an optical disk requiring no compensation control is loaded, the output determination circuit 20 can restrict the operations of the interference mode compensation circuit 12.

The structure including the error detection circuit 31, as shown in FIG. 17, and the structure including the disk discrimination circuit 32, as shown in FIG. 18, can be applied to the embodiments shown in FIGS. 7 to 19A and 19B.

As has been described above, the present invention can provide an optical disk apparatus incorporating an objective lens driving apparatus capable of eliminating the effect of an interference mode, which simultaneously causes movements in both the focusing direction and tracking direction, and capable of independently controlling the positions of the objective lens holder in the focusing direction and tracking direction.

In addition, the present invention can provide an optical disk apparatus incorporating an objective lens driving apparatus capable of suppressing, even if the recording density is enhanced, the effect of the interference mode, which simultaneously causes displacements in both the focusing direction and tracking direction, and capable of independently controlling the positions of the objective lens (objective lens holder) in the focusing direction and tracking direction, thereby realizing high-precision positioning operations, as well as an adjustment method applied to this optical disk apparatus.

**Claims**

1. An objective lens driving apparatus **characterized by** comprising:

    an objective lens (3);
    an objective lens holder (4) for holding the objective lens, the objective lens holder being supported to be movable in an optical axis direction of a light beam made incident on the objective lens and a direction perpendicular to the optical axis direction;

a focusing coil (13) for driving the objective lens holder in the optical axis direction;

a tracking coil (14) for driving the objective lens holder in the direction perpendicular to the optical axis direction;

focus detection means (6, 7, 8) for detecting a positioning error of the objective lens holder in the optical axis direction;

tracking detection means (6, 7, 9) for detecting a positioning error of the objective lens holder in the direction perpendicular to the optical axis direction;

focus control means (10) for receiving a detection signal from the focus detection means and outputting an arithmetic operation result of this detection signal to the focusing coil;

tracking control means (11) for receiving a detection signal from the tracking detection means and outputting an arithmetic operation result of this detection signal to the tracking coil; and

compensation means (12) for receiving at least one of output signals from the focus control means and the tracking control means, and adding an arithmetic operation result of the received signal to an output signal from the tracking control means to the tracking coil or to an output signal from the focus control means to the focusing coil.

2. An objective lens driving apparatus according to claim 1, **characterized in that** the compensation means arithmetically processes the output signal from the tracking control means and adds the arithmetic operation result to the output signal from the focus control means to the focusing coil.

3. An objective lens driving apparatus according to claim 1, **characterized in that** the compensation means arithmetically processes the output signal from the focus control means and adds the arithmetic operation result to the output signal from the tracking control means to the tracking coil.

4. An objective lens driving apparatus according to claim 1, **characterized in that** the compensation means arithmetically processes the output signal from the tracking control means and adds the arithmetic operation result to the output signal from the focus control means to the focusing coil, and the compensation means arithmetically processes the output signal from the focus control means and adds the arithmetic operation result to the output signal from the tracking control means to the tracking coil.

5. An objective lens driving apparatus according to claim 1, **characterized in that** the compensation means performs arithmetic operations to provide such frequency characteristics as to pass a frequency component near a control band determined by the tracking control means and the focus control means.

6. An objective lens driving apparatus according to claim 1, **characterized by** further comprising compensation means (12) for compensating reversion of polarity, when the polarity of a signal detected by the tracking detection means is reversed while the objective lens is being tracked to a desired position.

7. An objective lens driving apparatus **characterized by** comprising:

an objective lens (3);

an objective lens holder (4) for holding the objective lens, the objective lens holder being supported to be movable in an optical axis direction of a light beam made incident on the objective lens and a direction perpendicular to the optical axis direction;

a focusing coil (13) for driving the objective lens holder in the optical axis direction;

a tracking coil (14) for driving the objective lens holder in the direction perpendicular to the optical axis direction;

focus detection means (6, 7, 8) for detecting a positioning error of the objective lens holder in the optical axis direction;

tracking detection means (6, 7, 9) for detecting a positioning error of the objective lens holder in the direction perpendicular to the optical axis direction;

focus control means (10) for receiving a detection signal from the focus detection means and outputting an arithmetic operation result of this detection signal to the focusing coil;

tracking control means (11) for receiving a detection signal from the tracking detection means and outputting an arithmetic operation result of this detection signal to the tracking coil; and

compensation means (12) for receiving at least one of detection signals from the focus detection means and the tracking detection means, and adding an arithmetic operation result of the received detection signal to a tracking error detection signal from the tracking detection means to the tracking control means or to a focus error detection signal from the focus detection means to the focus control means.

8. An objective lens driving apparatus according to claim 7, **characterized in that** the compensation means arithmetically processes the tracking error detection signal from the tracking detection means and adds the arithmetic operation result to the focus error detection signal from the focus detection means.

9. An objective lens driving apparatus according to claim 7, **characterized in that** the compensation means arithmetically processes the focus error detection signal from the focus detection means and adds the arithmetic operation result to the tracking error detection signal from the tracking detection means.

10. An objective lens driving apparatus according to claim 7, **characterized in that** the compensation means arithmetically processes the tracking error detection signal from the tracking detection means and adds the arithmetic operation result to the focus error detection signal from the focus detection means, and the compensation means arithmetically processes the focus error detection signal from the focus detection means and adds the arithmetic operation result to the tracking error detection signal from the tracking detection means.

11. An objective lens driving apparatus according to claim 7, **characterized in that** the compensation means performs arithmetic operations to provide such frequency characteristics as to pass a frequency component near a control band determined by the tracking control means and the focus control means.

12. An objective lens driving apparatus according to claim 7, **characterized by** further comprising compensation means (12) for compensating reversion of polarity, when the polarity of a signal detected by the tracking detection means is reversed while the objective lens is being tracked to a desired position.

13. An optical disk apparatus **characterized by** comprising:

   an objective lens (3) for converging a light beam onto an optical disk;
   an objective lens holder (4) for holding the objective lens, the objective lens holder being supported to be movable in an optical axis direction of a light beam made incident on the objective lens and a direction perpendicular to the optical axis direction;
   a focusing coil (13) for driving the objective lens holder in the optical axis direction;
   a tracking coil (14) for driving the objective lens holder in the direction perpendicular to the optical axis direction;
   focus detection means (6, 7, 8) for detecting a positioning error of the objective lens holder in the optical axis direction;
   tracking detection means (6, 7, 9) for detecting a positioning error of the objective lens holder in the direction perpendicular to the optical axis direction;
   control means (10, 11, 12) for arithmetically processing at least one of detection signals from the focus detection means and the tracking detection means and outputting a control signal to each of the focusing coil and the tracking coil; and
   determination means (20) for temporarily restricting functions of the control means when the determination means (20) has determined that a disturbance component is mixed in the detection signal.

14. An optical disk apparatus according to claim 13, **characterized in that** the control means comprises:

   focus control means (10) for receiving a detection signal from the focus detection means and outputting a focus control signal to the focusing coil;
   tracking control means (11) for receiving a detection signal from the tracking detection means and outputting a tracking control signal to the tracking coil; and
   compensation means (12) for receiving an output signal from one of the focus control means and the tracking control means, and arithmetically processing the received output signal.

15. An optical disk apparatus according to claim 14, **characterized in that** the compensation means arithmetically processes the tracking control signal from the tracking control means and adds the arithmetic operation result to the focus control signal.

16. An optical disk apparatus according to claim 14, **characterized in that** the compensation means arithmetically processes the focus control signal from the focus control means and adds the arithmetic operation result to the tracking control signal.

17. An optical disk apparatus according to claim 14, **characterized in that** the compensation means arithmetically processes the tracking control signal from the tracking control means and adds the arithmetic operation result to the focus control signal, and the compensation means arithmetically processes the focus control signal from the focus control means and adds the arithmetic operation result to the tracking control signal.

18. An optical disk apparatus according to claim 14, **characterized in that** the compensation means arithmetically processes the detection signal from the tracking detection means and adds the arithmetic operation result to the focus control signal.

19. An optical disk apparatus according to claim 14, **characterized in that** the compensation means arithmetically processes the detection signal from the focus detection means and adds the arithmetic operation result to the tracking control signal.

20. An optical disk apparatus according to claim 14, **characterized in that** the compensation means arithmetically processes the detection signal from the tracking detection means and adds the arithmetic operation result to the focus control signal, and the compensation means arithmetically processes the detection signal from the focus detection means and adds the arithmetic operation result to the tracking control signal.

21. An optical disk apparatus according to claim 14, **characterized in that** the compensation means performs arithmetic operations to provide such frequency characteristics as to pass a frequency component near a control band determined by the focus control means and the tracking control means.

22. An optical disk apparatus according to claim 14, **characterized by** further comprising change-over switch means (17) for switching an arithmetic processing method in the compensation means in accordance with a tracking control state.

23. An optical disk apparatus according to claim 22, **characterized in that** the change-over switch means (17) corrects reversion of polarity, when the polarity of a detection signal detected by the tracking detection means is reversed while the objective lens is being tracked to a desired position.

24. An optical disk apparatus according to claim 13, **characterized in that** the determination means determines a header signal and a jump signal to be disturbance components.

25. An optical disk apparatus according to claim 14, **characterized in that** the determination means temporarily restricts functions of the compensation means when the determination means has determined that a disturbance component is mixed in the detection signal obtained by the tracking detection means.

26. An optical disk apparatus according to claim 14, **characterized in that** the determination means temporarily restricts functions of the compensation means when the determination means has determined a tracking control error on the basis of a disturbance component mixed in the detection signal obtained by the tracking detection means.

27. An optical disk apparatus according to claim 13, **characterized in that** the control means comprises:

focus control means (10) for arithmetically processing the detection signal from the focus detection means and outputting a focus control signal to the focusing coil;
tracking control means (11) for arithmetically processing the detection signal from the tracking detection means and outputting a tracking control signal to the tracking coil; and
compensation means (12) for receiving at least one of the detection signals from the focus detection means and the tracking detection means, and adding an arithmetic operation result of the received detection signal to a tracking error detection signal from the tracking detection means to the tracking control means or to a focus error detection signal from the focus detection means to the focus control means.

28. An optical disk apparatus **characterized by** comprising:

an objective lens (3) for converging a light beam onto an optical disk having information recordable/reproducible land tracks and groove tracks;
an objective lens holder (4) for holding the objective lens, the objective lens holder being supported to be movable in an optical axis direction of a light beam made incident on the objective lens and a direction perpendicular to the optical axis direction;
a focusing coil (13) for driving the objective lens holder in the optical axis direction;
a tracking coil (14) for driving the objective lens holder in the direction perpendicular to the optical axis direction;
focus detection means (6, 7, 8) for detecting a positioning error of the objective lens holder in the optical axis direction;
tracking detection means (6, 7, 9) for detecting a positioning error of the objective lens holder in the direction perpendicular to the optical axis direction;
control means (10, 11, 12) for arithmetically processing at least one of detection signals from the focus detection means and the tracking detection means and outputting a control signal to each of the focusing coil and the tracking coil;
disturbance generating means (21) for generating a disturbance component of a predetermined frequency and adding the disturbance component to the detection signal; and

phase difference detection means (23) for detecting a phase difference between a phase of a response signal corresponding to the detection signal, to which the disturbance component has been added, and a phase of the added disturbance component, in each of cases where the land tracks are being subjected to a tracking control and the groove tracks are being subjected to the tracking control.

29. An optical disk apparatus according to claim 28, **characterized in that** the phase difference detection means sets parameters for arithmetic operations in the control means such that a difference value between the phase difference in the case where the land tracks are being subjected to the tracking control and the phase difference in the case where the groove tracks are being subjected to the tracking control may become a predetermined value or less.

30. An optical disk apparatus **characterized by** comprising:

an objective lens (3) for converging a light beam onto an optical disk;
an objective lens holder (4) for holding the objective lens, the objective lens holder being supported to be movable in an optical axis direction of a light beam made incident on the objective lens and a direction perpendicular to the optical axis direction;
a focusing coil (13) for driving the objective lens holder in the optical axis direction;
a tracking coil (14) for driving the objective lens holder in the direction perpendicular to the optical axis direction;
focus detection means (6, 7, 8) for detecting a positioning error of the objective lens holder in the optical axis direction;
tracking detection means (6, 7, 9) for detecting a positioning error of the objective lens holder in the direction perpendicular to the optical axis direction;
focus control means (10) for arithmetically processing a detection signal from the focus detection means and outputting a focus control signal to the focusing coil;
tracking control means (11) for arithmetically processing a detection signal from the tracking detection means and outputting a tracking control signal to the tracking coil;
compensation means (12) for arithmetically processing the tracking control signal from the tracking control means on the basis of a predetermined compensation coefficient, and adding the arithmetic operation result to the focus control signal;
disturbance generating means (21) for generating a disturbance component of a predetermined frequency and adding the disturbance component to the detection signal obtained by the tracking detection means;
gain comparison means (22) for comparing an amplitude of the output signal from the tracking detection means and an amplitude of the disturbance component generated by the disturbance generating means; and
adjustment means (22) for adjusting the compensation coefficient for the arithmetic operation in the compensation means in accordance with a comparison result of the gain comparison means.

31. An optical disk apparatus **characterized by** comprising:

an objective lens (3) for converging a light beam onto an optical disk;
an objective lens holder (4) for holding the objective lens, the objective lens holder being supported to be movable in an optical axis direction of a light beam made incident on the objective lens and a direction perpendicular to the optical axis direction;
a focusing coil (13) for driving the objective lens holder in the optical axis direction;
a tracking coil (14) for driving the objective lens holder in the direction perpendicular to the optical axis direction;
focus detection means (6, 7, 8) for detecting a positioning error of the objective lens holder in the optical axis direction;
tracking detection means (6, 7, 9) for detecting a positioning error of the objective lens holder in the direction perpendicular to the optical axis direction;
focus control means (10) for arithmetically processing a detection signal from the focus detection means and outputting a focus control signal to the focusing coil;
tracking control means (11) for arithmetically processing a detection signal from the tracking detection means and outputting a tracking control signal to the tracking coil;
compensation means (12) for arithmetically processing the tracking control signal from the tracking control means on the basis of a predetermined compensation coefficient, and adding the arithmetic operation result to the focus control signal;
disturbance generating means (21) for generating a disturbance component of a predetermined frequency and adding the disturbance component to the detection signal obtained by the tracking detection means;

phase comparison means (23) for comparing a phase of the output signal from the tracking detection means and a phase of the disturbance component generated by the disturbance generating means; and

adjustment means (22) for adjusting the compensation coefficient for the arithmetic operation in the compensation means in accordance with a comparison result of the phase comparison means.

**32.** An adjustment method for an optical disk apparatus **characterized by** comprising:

an objective lens (3) for converging a light beam onto an optical disk having information recordable/reproducible land tracks and groove tracks;

an objective lens holder (4) for holding the objective lens, the objective lens holder being supported to be movable in an optical axis direction of a light beam made incident on the objective lens and a direction perpendicular to the optical axis direction;

a focusing coil (13) for driving the objective lens holder in the optical axis direction;

a tracking coil (14) for driving the objective lens holder in the direction perpendicular to the optical axis direction;

focus detection means (6, 7, 8) for detecting a positioning error of the objective lens holder in the optical axis direction;

tracking detection means (6, 7, 9) for detecting a positioning error of the objective lens holder in the direction perpendicular to the optical axis direction; and

control means (10, 11, 12) for arithmetically processing at least one of detection signals from the focus detection means and the tracking detection means and outputting a control signal to each of the focusing coil and the tracking coil,

the method comprising:

generating a disturbance component of a predetermined frequency;

adding the disturbance component to the detection signal;

detecting a phase difference between a phase of a response signal corresponding to the detection signal, to which the disturbance component has been added, and a phase of the added disturbance component, in each of cases where the land tracks are being subjected to a tracking control and the groove tracks are being subjected to the tracking control; and

setting parameters for arithmetic operations in the control means such that a difference value between the phase difference in the case where the land tracks are being subjected to the tracking control and the phase difference in the case where the groove tracks are being subjected to the tracking control may become a predetermined value or less.

**33.** An adjustment method for an optical disk apparatus **characterized by** comprising:

an objective lens (3) for converging a light beam onto an optical disk;

an objective lens holder (4) for holding the objective lens, the objective lens holder being supported to be movable in an optical axis direction of a light beam made incident on the objective lens and a direction perpendicular to the optical axis direction;

a focusing coil (13) for driving the objective lens holder in the optical axis direction;

a tracking coil (14) for driving the objective lens holder in the direction perpendicular to the optical axis direction;

focus detection means (6, 7, 8) for detecting a positioning error of the objective lens holder in the optical axis direction;

tracking detection means (6, 7, 9) for detecting a positioning error of the objective lens holder in the direction perpendicular to the optical axis direction;

focus control means (10) for arithmetically processing a detection signal from the focus detection means and outputting a focus control signal to the focusing coil;

tracking control means (11) for arithmetically processing a detection signal from the tracking detection means and outputting a tracking control signal to the tracking coil; and

compensation means (12) for arithmetically processing the tracking control signal from the tracking control means on the basis of a predetermined compensation coefficient, and adding the arithmetic operation result to the focus control signal,

the method comprising:

generating a disturbance component of a predetermined frequency;

adding the disturbance component to the detection signal obtained by the tracking detection means;

comparing an amplitude of the output signal from the tracking detection means and an amplitude of the disturbance component generated by the disturbance generating means; and

adjusting the compensation coefficient for the arithmetic operation in the compensation means in accordance with the comparison result.

**34.** An adjustment method for an optical disk apparatus **characterized by** comprising:

an objective lens (3) for converging a light beam onto an optical disk;

an objective lens holder (4) for holding the objective lens, the objective lens holder being supported to be movable in an optical axis direction of a light beam made incident on the objective lens and a direction perpendicular to the optical axis direction;

a focusing coil (13) for driving the objective lens holder in the optical axis direction;

a tracking coil (14) for driving the objective lens holder in the direction perpendicular to the optical axis direction;

focus detection means (6, 7, 8) for detecting a positioning error of the objective lens holder in the optical axis direction;

tracking detection means (6, 7, 9) for detecting a positioning error of the objective lens holder in the direction perpendicular to the optical axis direction;

focus control means (10) for arithmetically processing a detection signal from the focus detection means and outputting a focus control signal to the focusing coil;

tracking control means (11) for arithmetically processing a detection signal from the tracking detection means and outputting a tracking control signal to the tracking coil; and

compensation means (12) for arithmetically processing the tracking control signal from the tracking control means on the basis of a predetermined compensation coefficient, and adding the arithmetic operation result to the focus control signal,

the method comprising:

generating a disturbance component of a predetermined frequency;

adding the disturbance component to the detection signal obtained by the tracking detection means;

comparing a phase of the output signal from the tracking detection means and a phase of the disturbance component generated by the disturbance generating means; and

adjusting the compensation coefficient for the arithmetic operation in the compensation means in accordance with the comparison result.

FIG. 1

F I G. 2

F I G. 3

111

103 101

102

109 108

107

105

110 106 104

X — Tracking direction

Y — Focusing direction

F I G. 4A

X

120

Y

105 113

101 112

106

112

F I G. 4B

F I G. 5

F I G. 6

F I G. 7

Sum/difference arithmetic circuit

Interference mode compensation circuit

Tracking control circuit

Focus control circuit

Output determination circuit

F I G. 8

Sum/difference arithmetic circuit

Interference mode compensation circuit

Tracking control circuit

Focus control circuit

Output determination circuit

F I G. 9

F I G. 10

Sum/difference arithmetic circuit

Interference mode compensation circuit

Tracking control circuit

Focus control circuit

Output determination circuit

Land/groove change-over switch circuit

FIG. 11

Amplifier output/disturbance amplitude

5KHz

0dB — Frequency

Gain characteristics

F I G. 12A

Amplifier output/disturbance amplitude

5KHz

0dB — Frequency

Disturbance frequency

F I G. 12B

Amplifier output/disturbance amplitude

5KHz

0dB — Frequency

Disturbance frequency

F I G. 12C

Confirm whether loaded optical disk is a disk requiring compensation —ST11

Input sine-wave disturbance of predetermined frequency and predetermined amplitude to tracking control circuit —ST12

Compare amplitude of output of tracking control circuit amplifier and amplitude of sine-wave disturbance input to tracking control circuit —ST13

ST15

Increase compensation parameter absolute value of interference mode compensation circuit

ST14

Amplifier output/disturbance amplitude < predetermined value          NO

YES

Adjustment end —ST16

F I G. 13

FIG. 14

F I G. 15

Sum/difference arithmetic circuit

Interference mode compensation circuit

Tracking control circuit

Focus control circuit

Output determination circuit

Land/groove change-over switch circuit

F I G. 16

FIG. 17

2

1

3
4
6

Sum/difference
arithmetic circuit — 7

14  16

15

5        13

Interference mode
compensation circuit    +

8    9

10

12

Focus control
circuit

Tracking control
circuit

11

Output
determination
circuit    ~ 20

Disk
discrimination
circuit    ~ 32

F I G. 18

EP 1 162 608 A2

F I G. 19A

Oscillation mode occurrence frequency
(disturbance frequency)

Amplifier output/disturbance amplitude

Gain (dB)

10

0

−10

−20

$10^3$

$10^4$

Frequency (Hz)

F I G. 19B

Phase (deg)

10

−100

−200

−300

$10^3$

$10^4$

Frequency (Hz)

Sum/difference
arithmetic circuit

Tracking control
circuit

Focus control
circuit

Interference mode
compensation circuit

Output determination
circuit

F I G. 20